# EUROPÄISCHE PATENTANMELDUNG

(11) **EP 2 071 296 A2**
(43) Veröffentlichungstag der Anmeldung: **17.06.2009**
(21) Anmeldenummer: 08105814.1
(22) Anmeldetag: 18.11.2008
(51) Int. Cl.: G01F 1/00

(54) **Heizblock für warmwassergerät**

(30) Priorität: 14.12.2007 DE 102007060190
(71) Anmelder: BSH Bosch und Siemens Hausgeräte GmbH, 81739 München (DE)
(72) Erfinder: Bauer, Franz, 83093, Bad Endorf (DE); Englisch, Christian, 83324, Ruhpolding (DE)

(57) **Zusammenfassung**

Die Erfindung betrifft einen Heizblock (1) für Warmwassergeräte, insbesondere für Durchlauferhitzer, umfassend eine Heizvorrichtung (2), einen Wasserzulauf (3) sowie einen Wasserablauf (4), eine Wasserzulauf (3) und Wasserablauf (4) verbindende Verrohrung (5), eine Turbinenöffnung (6), sowie einen Hallsensor (12), wobei der Hallsensor (12) auf der Außenwand der Turbinenöffnung (6) befindlich ist

Die Erfindung zeichnet sich aus durch einen Drehverschluss (9) zum Verschließen der Turbinenöffnung (6), wobei der Drehverschluss (9) druck- und wasserfest verschließbar ist, und der Drehverschluss (9) eine Achse (10) aufweist, wobei Drehverschluss (9) und Achse (10) einstückig ausgeformt sind und auf der Achse (10) ein das Mittel zur Durchflussmessung (8), das einen Magneten (11) umfasst, frei rotierbar befestigbar ist.

Die erfindungsgemäße Vorrichtung bietet in vorteilhafter Weise die Möglichkeit, eine Messvorrichtung zur Bestimmung des Durchflusses kostengünstig in einen Heizblock zu integrieren.

## Beschreibung

Die Erfindung betrifft einen Heizblock für ein Warmwassergerät umfassend eine Heizvorrichtung, einen Wasserzulauf sowie einen Wasserablauf, eine Zu- und Ablauf verbindende Verrohrung, eine Turbinenöffnung sowie einen Hallsensor, wobei der Hallsensor auf der Außenwand der Turbinenöffnung befindlich ist.

Derartige Heizblöcke für Warmwassergeräte sind in einer Vielzahl im Stand der Technik bekannt. Der Heizblock von Durchlauferhitzern besteht aus einem druckfesten Material. Bei Durchlauferhitzern wird der Wasserdurchlauf gemessen um Steuerregelvorgänge in Abhängigkeit des Wasserdurchflusses auszulösen. Weit verbreitet ist die Durchflussmessung mittels Messturbine. Häufig weist der Durchflusssensor ein eigenes Gehäuse auf, das im Servicefall leicht demontiert, gereinigt oder ersetzt werden kann. Diese Lösung hat aber den Nachteil, dass das druckfeste Gehäuse Kosten verursacht, da es zusätzliche Dichtstellen erfordert.

Aus diesem Grund gibt es die Bestrebung, die Messturbine in den Heizblock zu integrieren. Bei bekannten Konstruktionen wird eine Kapsel mit der Messturbine und Magneten in den Wassereinlauf eingebracht und die Drehzahl der rotierenden Magnete über Hallsensoren abgegriffen, die auf der Oberfläche des Heizblocks angebracht sind. Im Servicefall ist es aber sehr schwierig, die Turbinen zu demontieren und zu ersetzen. Dies ist deshalb von Bedeutung, da Durchflussmesser empfindlich gegen Verschmutzung, Kalk oder ähnliches sind und häufig die Ursache für Kundendiensteinsätze darstellen. Eine einwandfreie Ermittlung des Wasserdurchflusses ist aber für eine optimale Steuerung der Heizvorgänge unerlässlich. In diesem Zusammenhang stellt die EP 1 693 651 A2 einen Wassermengenmessmesser mit einem Flügelrad vor, welches mit mindestens einem mit diesem verbundenen Permanentmagneten und einem Hallsensor verbunden ist, der mit dem Gehäuse des Wassermengenmessers verbunden ist.

Ausgehend von diesem Stand der Technik ist es Aufgabe der vorliegenden Erfindung, einen Heizblock gemäß des Oberbegriffes zur Verfügung zu stellen, der die genannten Nachteile vermeidet und insbesondere einen schnellen und kostengünstigeren Kundendienst ermöglicht.

Gelöst wird die Aufgabe mit den Merkmalen des Patentanspruches 1. Vorteilhafte Aus- und Weiterbildungen, welche einzeln oder in Kombination miteinander eingesetzt werden können, sind Gegenstand der Unteransprüche.

Der erfindungsgemäße Heizblock für Warmwassergeräte baut auf den Merkmalen des Oberbegriffes dadurch auf, dass der Heizblock einen Drehverschluss zum Verschließen der Turbinenöffnung aufweist, wobei der Drehverschluss druck- und wasserfest verschließbar ist und der Drehverschluss eine Achse aufweist, wobei Drehverschluss und Achse einstückig ausgeformt sind und auf der Achse ein Mittel zur Durchflussmessung aufweisen, das einen Magneten umfasst, der frei rotierbar befestigbar ist.

Dadurch wird eine gegenüber dem Stand der Technik erheblich verbesserte Kundendienstfreundlichkeit gewährleistet.

Der erfindungsgemäße Heizblock ermöglicht es, eine Konstruktion zu finden, die einfach in einem Heizblock eines Warmwassergerätes integriert werden kann. Für den Fall, dass die Messturbine überholt werden muss, ist diese demontierbar ohne dabei weitere Komponenten wie z.B. Rohre zu benötigen. Dadurch, dass der Drehverschluss druck- und wasserfest verschließbar ist, wird gewährleistet, dass der Heizblock sicher und zuverlässig arbeitet. Die erfindungsgemäße Konstruktion bildet eine kostengünstige Lösung um eine Messvorrichtung zur Bestimmung des Wasserdurchflusses kostengünstig in einen Heizblock zu integrieren. Im Servicefall können dadurch Kosten gespart werden, weil die Messvorrichtung einfach ausgebaut und gereinigt bzw. ersetzt werden kann, ohne dass weitere Baugruppen wie Rohre oder dergleichen demontiert werden müssen. Dies reduziert die benötigte Zeit für Außeneinbau der Ersatzteile erheblich. Die Ersatzteilkosten sind dabei gering und die Montagezeit für einen Austausch ist ebenfalls sehr gering.

In einer bevorzugten Weiterbildung ist die Messvorrichtung ein Flügelrad.

Weiterhin bevorzugt ist dabei, dass die Messvorrichtung ein Propeller ist. In einer weiteren bevorzugten Weiterbildung ist die Messvorrichtung ein Impeller. Dabei bezeichnet der Begriff Impeller einen ummantelten Propeller. Die Ummantelung bewirkt eine Leistungssteigerung im Vergleich zu einem nicht-ummantelten Propeller. Impeller zeigen durch die Ummantelung eine verbesserte vom Fluid an den Propeller übertragene Leistung. Der Grund für die Leistungssteigerung liegt in der Vermeidung der Randwirbelverluste, wie sie an Propeller-, Schaufel- und Flügelspitzen auftreten.

In einer weiteren bevorzugten Ausführungsform umfasst der Heizblock Kunststoff und/oder Metall.

Als vorteilhaft hat es sich auch erwiesen, wenn der Heizblock für Warmwassergeräte elektrisch beheizt wird.

Besonders bevorzugt ist dabei, wenn der elektrisch betriebene Heizblock ein Blankheizdrahtgerät ist.

Die erfindungsgemäße Vorrichtung bietet in vorteilhafter Weise die Möglichkeit, eine Messvorrichtung zur Bestimmung des Durchflusses kostengünstig in einen Heizblock zu integrieren.

Anhand dreier in Zeichnung dargestellten Ausführungsbeispielen wird die Erfindung nachfolgend näher beschrieben. Dabei zeigen:
- Fig. 1: Eine perspektivische Ansicht einer bevorzugten Ausführungsform von schräg vorne; und
- Fig. 2: eine Detailansicht einer herausgenommenen Messvorrichtung; und
- Fig. 3: eine schematische Darstellung einer bevorzugten Ausführungsform des Heizblocks.

In den Figuren werden gleiche oder im Wesentlichen gleich bleibende Elemente mit den gleichen Bezugszeichen versehen.

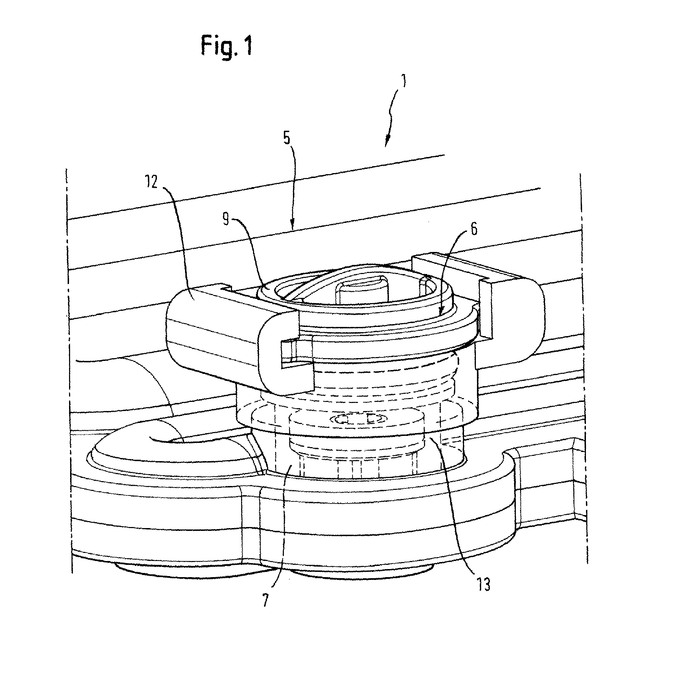

Fig. 1 zeigt zur Verdeutlichung einer Erfindung eine schematische Darstellung eines bevorzugten Ausführungsbeispiels eines Heizblocks 1 für Warmwassergeräte, der eine Turbinenöffnung 6 aufweist. Diese Turbinenöffnung 6 ist durch einen Drehverschluss 9 druck- und wasserfest verschließbar.

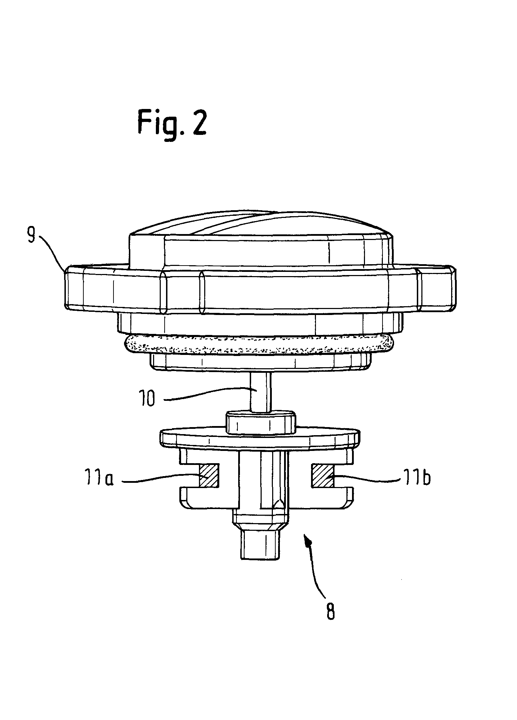

Fig. 2 zeigt zur Verdeutlichung der Erfindung ein bevorzugtes Mittel zur Durchflussmessung 8. Auf der Oberseite weist dieses einen Drehverschluss 9 zum Verschließen der Turbinenöffnung 6 auf, mithilfe dessen die Turbinenöffnung 6 druck- und wasserfest verschließbar ist. Weiter weist der Drehverschluss eine Achse 10 auf, wobei Drehverschluss 9 und Achse 10 einstückig ausgeformt sind. Auf der Achse 10 befindet sich ein Mittel zur Durchflussmessung 8, das einen Magneten 11 umfasst, der frei rotierbar befestigt ist. Auf Fig. 2 ist das Mittel zur Durchflussmessung 8 ein Flügelrad. Dadurch, dass Drehverschluss 9 und Achse 10 einstückig ausgeformt sind, kann das Mittel zur Durchflussmessung 8 in schneller und einfacher Weise ausgebaut und gereinigt bzw. ersetzt werden, ohne dass weitere Baugruppen wie zum Beispiel Rohre etc. demontiert werden müssen.

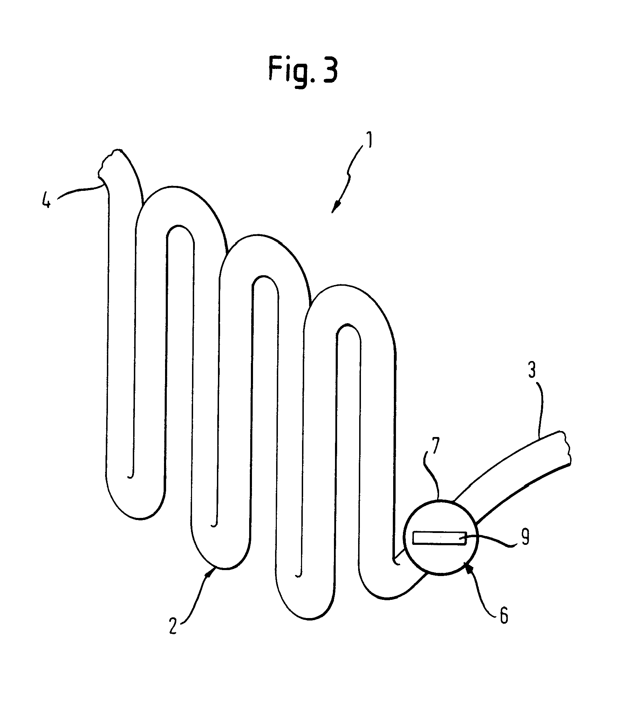

Zur weiteren Verdeutlichung der Erfindung zeigt Fig. 3 eine bevorzugte Ausführungsform eines Heizblockes 1 für Warmwassergeräte, insbesondere für Durchlauferhitzer. Dieser Heizblock 1 umfasst einen Wasserzulauf 3, einen Wasserablauf 4 sowie eine Zulauf 3 und Ablauf 4 verbindende Verrohrung 5. Innerhalb der Verrohrung 5 befindet sich mindestens eine Heizvorrichtung 2. Des Weiteren weist der Heizblock 1 eine Turbinenöffnung 6 auf, in die ein Mittel zur Durchflussmessung 8, das einen Magneten 11a, 11b umfasst, frei rotierbar eingesetzt werden kann. Mittels eines Drehverschlusses 9 ist die Turbinenöffnung 6 druck- und wasserfest verschließbar.

Die Erfindung lässt sich treffend wie folgt beschreiben: Die vorgeschlagene Konstruktion ist dadurch gekennzeichnet, dass der Heizblock 1 eine Öffnung 6 aufweist, die von außen in den Strömungskanal 7 des Heizblockes reicht. Diese Öffnung 6 wird mit einem wiederverschließbaren Drehverschluss 9 druckfest verschlossen. An dem Drehverschluss 9 ist eine Achse 10 angebracht, auf der eine Mittel zur Durchflussmessung 8 mit Magneten 11 a, 11b drehbar gelagert ist. Das Mittel zur Durchflussmessung 8 reicht in den Strömungskanal 7 des Heizblockes 1 und wird durch den Wasserfluss in Drehbewegung versetzt. An dem Heizblock 1 wird außen ein Hallsensor 12 angebracht, der die Drehbewegung des Magneten 11 a, 11b durch die Wandstärke des Heizblockes 1 erfasst.

Die erfindungsgemäße Vorrichtung bietet in vorteilhafter Weise die Möglichkeit, eine Messvorrichtung zur Bestimmung des Durchflusses kostengünstig in einen Heizblock zu integrieren.

### Bezugszeichenliste

- 1: Heizblock
- 2: Heizvorrichtung
- 3: Wasserzulauf
- 4: Wasserablauf
- 5: Verrohrung
- 6: Turbinenöffnung
- 7: Strömungskanal
- 8: Mittel zur Durchflussmessung
- 9: Drehverschluss
- 10: Achse
- 11 a;11 b: Magnet
- 12: Hallsensor
- 13: Außenwand

## Patentansprüche

1. Heizblock (1) für Warmwassergeräte, insbesondere für Durchlauferhitzer, wenigstens umfassend eine Heizvorrichtung (2), einen Wasserzulauf (3) sowie einen Wasserablauf (4), eine Wasserzulauf (3) und Wasserablauf (4) verbindende Verrohrung (5), eine Turbinenöffnung (6) sowie einen Hallsensor (12), wobei der Hallsensor (12) auf der Außenwand der Turbinenöffnung (6) befindlich ist, **gekennzeichnet durch** wenigstens einen Drehverschluss (9) zum Verschließen der Turbinenöffnung (6) wobei der Drehverschluss (9) druck- und wasserfest verschließbar ist und der Drehverschluss (9) eine Achse (10) aufweist, wobei Drehverschluss (9) und Achse (10) einstückig ausgeformt sind, und auf der Achse ein Mittel zur Durchflussmessung (8), das einen Magneten (11a; 11b) umfasst, frei rotierbar befestigbar ist.

2. Heizblock (1) gemäß Anspruch 1, **dadurch gekennzeichnet, dass** das Mittel zur Durchflussmessung (8) ein Flügelrad ist.

3. Heizblock (1) gemäß Anspruch 1 oder 2, **dadurch gekennzeichnet, dass** das Mittel zur Durchflussmessung (8) ein Propeller ist.

4. Heizblock (1) nach einem der Ansprüche 1 bis 3, **dadurch gekennzeichnet, dass** das Mittel zur Durchflussmessung (8) ein Impeller ist.

5. Heizblock (1) nach einem der vorhergehenden Ansprüche, **dadurch gekennzeichnet, dass** der Heizblock (1) elektrisch beheizbar ist.

6. Heizblock (1) nach Anspruch 5, **dadurch gekennzeichnet, dass** die Wassererwärmung über ein Blankheizdrahtverfahren ausführbar ist.

7. Heizblock nach einem der vorhergehenden Ansprüche, **dadurch gekennzeichnet, dass** der Heizblock (1) Kunststoff und/oder Metall umfasst.
